# EUROPEAN PATENT APPLICATION

(11) **EP 1 372 105 A1**
(43) Date of publication of application: **17.12.2003**
(21) Application number: 03012614.8
(22) Date of filing: 03.06.2003
(51) Int. Cl.: G06K 17/00

(54) **Printer and printing method for printing an image of high quality**

(30) Priority: 05.06.2002 JP 2002164714
(71) Applicant: Fuji Photo Film Co., Ltd., Kanagawa (JP)
(72) Inventor: Kinjo, Naoto, Ashigara-kami-gun, Kanagawa (JP)
(74) Representative: Klunker . Schmitt-Nilson . Hirsch

(57) **Abstract**

A printer (2) comprises a data reading section (11), a data communicating section (13), an operating section (15), a monochrome printing section (17), and a color printing section (18). The data communicating section is connected to an image server (3) placed at a side of an image supplier (5). A magazine (6) includes a bar code (6a) printed on each page thereof. A page to be printed is set on a scanner of the printer. Upon pressing a read key (15a), the data reading section reads the bar-code data. A picture identification number of a picture to be printed is inputted through the operating section. On the basis of inputted order data, the image server is searched to read original detailed image data concerned. The monochrome printing section or the color printing section performs printing on the basis of the read original image data.

## Description

### BACKGROUND OF THE INVENTION

### 1. Field of the Invention

The present invention relates to a printer and a printing method for printing an image of high quality.

### 2. Description of the Related Art

When printing an original of a print medium, which is a picture, writing and so forth, the original is copied by a copying machine or the like. In another way, the original is scanned by a scanner and a scanned image is printed by using a printer.

However, in the case using the copying machine and the scanner, image quality deteriorates when the original is copied or scanned. Thus, there arises a problem in that it is impossible to obtain a high-quality print.

### SUMMARY OF THE INVENTION

In view of the foregoing, it is a primary object of the present invention to provide a printer in which an original of a print medium is printed in a large size and in a high-quality state.

It is a second object of the present invention to provide a printing method by which an original of a print medium is easily printed in a high-quality state.

In order to achieve the above and other objects, the printer according to the present invention comprises a reading device, an image-data obtaining device, and a printing device. From a print medium having original identification information for identifying an original, the reading device reads the original identification information. The image-data obtaining device obtains image data corresponding to the original identification information. The printing device performs printing on the basis of the obtained image data. The image-data obtaining device obtains the image data from an image server storing the image data. Alternatively, the image-data obtaining device may obtain the image data from a storage medium of a printer storing the image data periodically transferred from the image server.

In the printing method according to the present invention, original identification information is read first from a print medium having the original identification information for identifying an original. And then, image data corresponding to the original identification information is obtained. Successively, printing is carried out on the basis of the obtained image data.

According to the printer of the present invention, it is possible to easily obtain a print of high image quality without regard to a print size.

According to the printing method of the present invention, it is possible to easily print a picture of the print medium in a high-quality state.

### BRIEF DESCRIPTION OF THE DRAWINGS

The above objects and advantages of the present invention will become apparent from the following detailed description of the preferred embodiments of the invention when read in conjunction with the accompanying drawings, in which:
Fig. 1 is a schematic illustration showing a structure of a printer and an image server according to the present invention;
Fig. 2 is a block diagram schematically showing the printer;
Fig. 3 is a perspective view of the printer;
Fig. 4 is an illustration showing a picture used for inputting order data; and
Fig. 5 is a flowchart showing a process sequence executed at a user side.

### DETAILED DESCRIPTION OF THE PREFERRED EMBODIMENT(S)

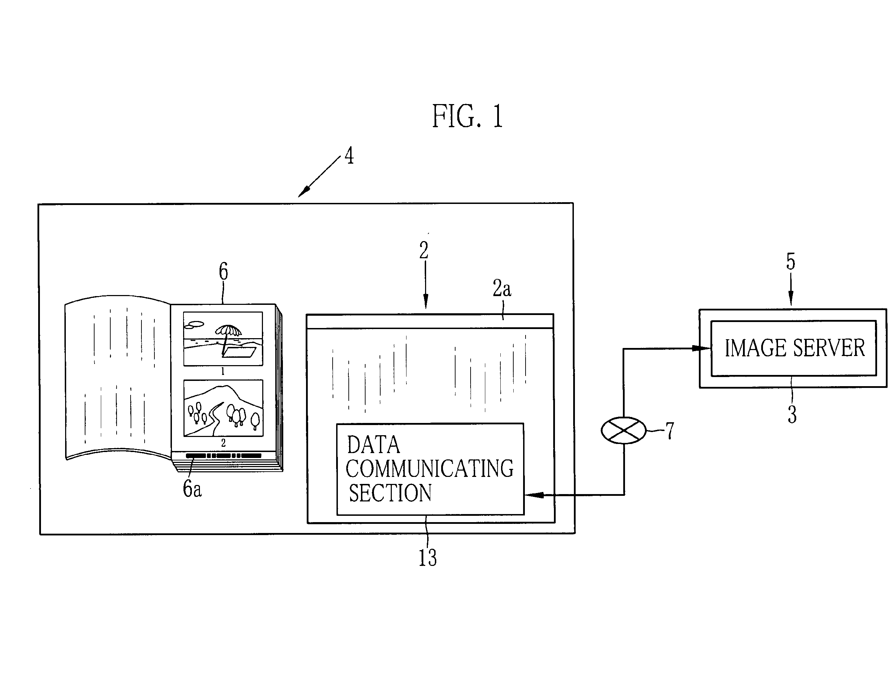

Fig. 1 is a schematic illustration showing a structure of a printer 2 and an image server 3 according to the present invention. The printer 2 is placed at a side of a user 4. The image server 3 is placed at a side of an image supplier 5, who is a publisher and so forth.

As to a magazine 6, a picture and writing are printed on each page thereof. In addition, a bar code 6a is printed. The bar code 6a includes supplier data, title data, page-identification data, picture-identification data of the pictures printed on the respective pages, and so forth. Incidentally, when plural pictures are printed on each page, the picture-identification data of the respective pictures are provided. Moreover, a picture-identification number corresponding to each picture is printed under the picture concerned.

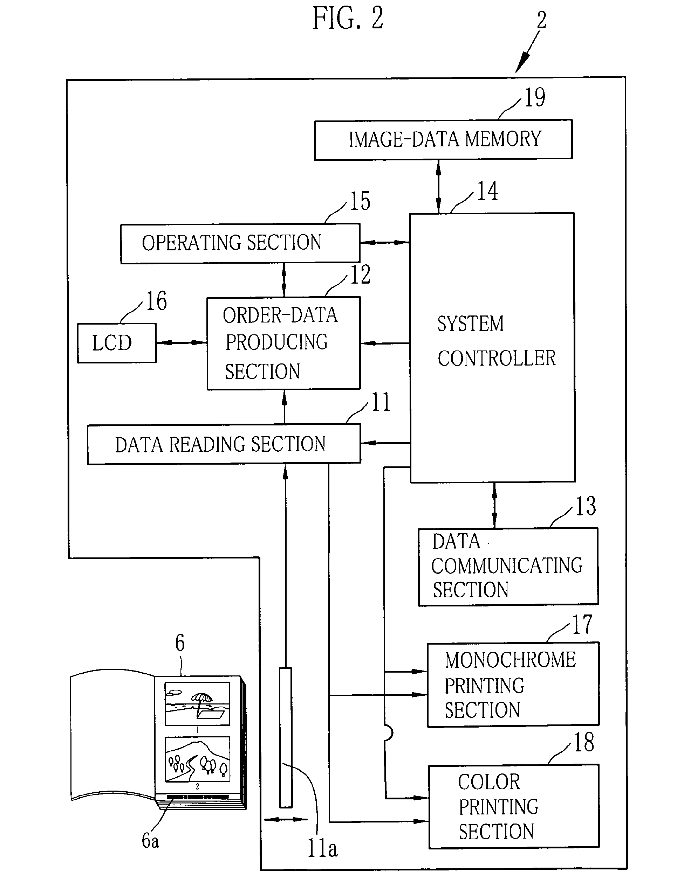

The printer 2 possesses a copy mode for copying and a print mode for printing. In addition to these modes, the printer 2 possesses a data reading function for the bar code and an order-data producing function, such as shown in Fig. 2. Further, the printer 2 possesses a color printing function besides a monochrome copying function. The printer 2 is able to connect with the image server 3 via the internet 7. In view of this, the printer 2 is provided with a data reading section 11, an order-data producing section 12, a data communicating section 13, a system controller 14, an operating section 15, an LCD (Liquid Crystal Display) 16, a monochrome printing section 17 , a color printing section 18 , and an image-data memory 19. The system controller 14 controls the respective sections to copy the picture. In addition, the controller 14 controls to write the order data.

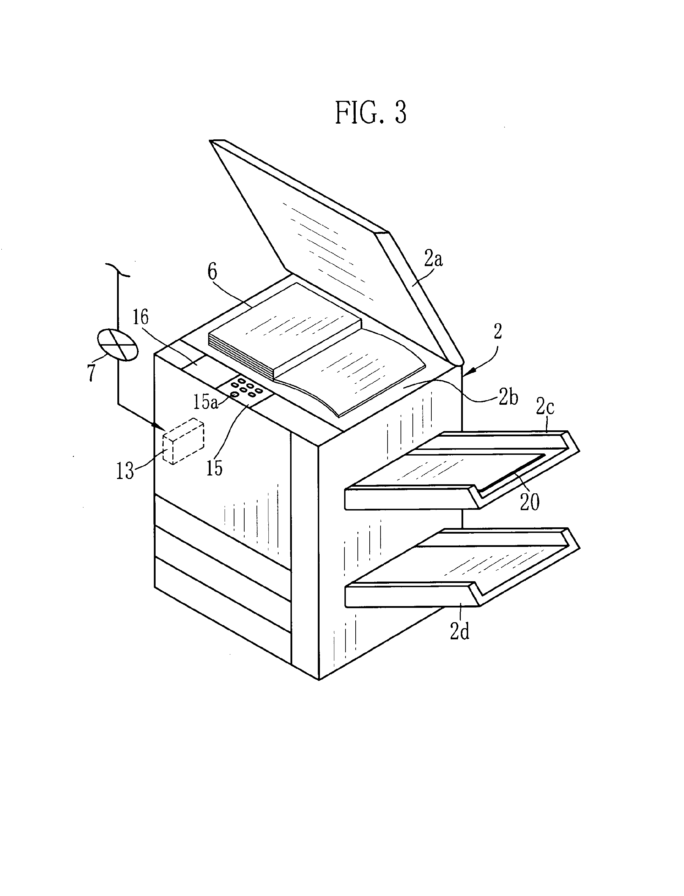

Such as shown in Fig. 3, the printer 2 is provided with an openable lid 2a, a scanner 2b, a print tray 2c, a copy tray 2d, and so forth to produce a print 20 having any size of A3, A4, and so forth. Recording papers of various sizes are set in the printer 2 to select the corresponding recording paper in accordance with the designated size. Meanwhile, the operating section 15 is provided with a paper-size designation key, a copy-number designation key, a copy-density designation key, a scale designation key, and a power-supply key. In addition, the operating section 15 is provided with a read key 15a.

Upon pressing the read key 15a under the print mode, the data reading section 11 recognizes the bar code 6a on the base of readout data drawn by a read head 11a, such as shown in Fig. 2. Successively, the data reading section 11 decodes the bar code 6a. The page identification data is transferred to the order-data producing section 12 in which an order-data input pictures 21 is produced on the basis of the page identification data. The order-data input picture 21 is sent to the LCD 16. From the operating section 15, the order data is inputted in accordance with a key operation. The order data is transferred to the order-data producing section 12. The order-data input picture 21 is displayed on the LCD 21.

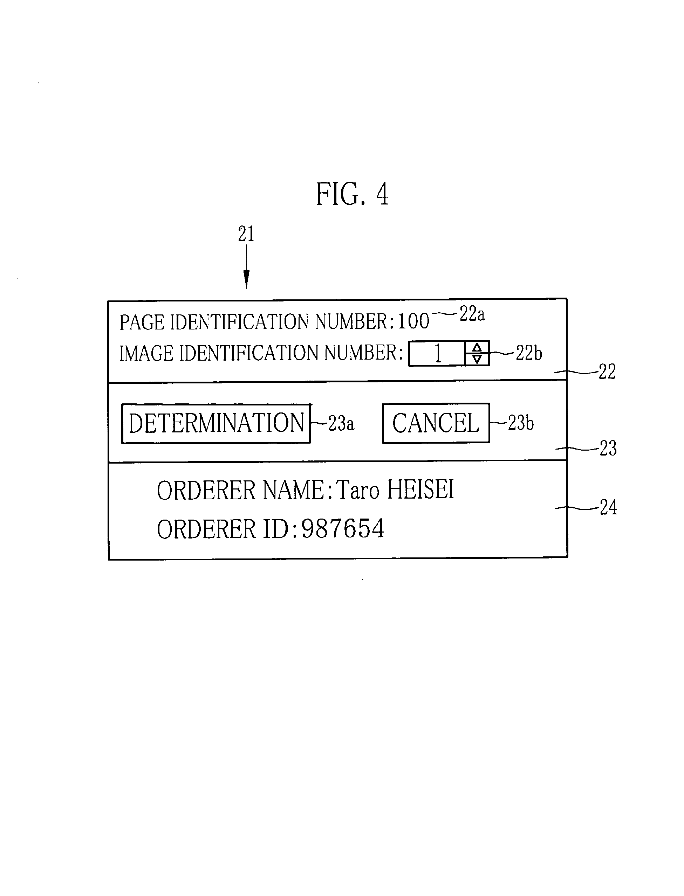

Fig. 4 shows an example of the order-data input picture 21 constituted of a data display area 22, an order-data confirmation area 23, and an orderer identification area 24. The data display area 22 includes display regions 22a and 22b of the page identification data and the picture identification data. A page identification number is indicated in the display region 22a, and a picture identification number is indicated in the display region 22b. Incidentally, the display region 22b of the picture identification data is provided with a number changing button. By operating the number changing button, it is possible to change the number in accordance with the operation thereof.

Within the order-data confirmation area 23, are displayed a determination button 23a and a cancel button 23b to determine or cancel the data inputted through the data display area 22.

Within the orderer identification area 24, are displayed orderer identification data including orderer ID, an orderer name, a telephone number of the orderer, and so forth, which are inputted in advance. Before user registration, one of a name, an address and a telephone number for identifying a person is used as the orderer identification data. Alternatively, a combination of the name, the address and the telephone number may be used as the orderer identification data. Incidentally, the orderer identification data is inputted through the operating section 15. Meanwhile, after the user registration, an orderer-ID number is used.

The order-data input picture 21 is checked to confirm the order contents . When the order contents are correct, the determination button 23a is operated to transfer the inputted order data to the data communicating section 13 to be connected with the image server 3 via the internet 7. The inputted order data is stored in a memory of the order-data producing section 12. In virtue of this, input of the common data is omitted when inputting the order data at the next time. The image server 3 is placed at the side of the image supplier 5 to store the original detailed image data relative to each title. The detailed image data is identified on the basis of title ID and the page identification data. Incidentally, the detailed image data is compressed in a JPEG (Joint Photographic Experts Group) style, for instance, to shorten a data transfer time. A way of compressing the data is not exclusive to JPEG, but the other well-known compressing way may be adopted.

Successively, an operation of the present embodiment is described bellow. When the user 4 views the magazine 6 and wants to print a certain page, the user sets the printer 2 to the print mode first. After the page to be printed has been placed on the scanner 2b, the user presses the read key 15a. Upon pressing the read key 15a, the data reading section 11 reads the original of the page placed on the scanner 2b. And then, the data reading section 11 identifies the bar code 6a by means of pattern recognition, for instance, to read the data of the bar code 6a. The read data is transferred to the order-data producing section 12 wherein the order-data input picture 21 is produced. The order-data input picture 21 is displayed on the LCD 16. The order data is inputted through the operating section 15, viewing the order-data input picture 21.

Print order data is set beforehand in the memory of the order-data producing section 12, such as shown in Fig. 4. After confirming the order-data input picture 21 displayed on the LCD 16, the determination button 23a is operated when there is no problem. When it is hoped to change the order data, contents indicated in the respective regions 22a and 22b of the data display area 22 are changed through the operating section 15. When changing the picture identification number indicated in the display region 22b, the number is advanced by operating the number-changing button to indicate the picture identification number to be desired. When the inputted data has no problem, the determination button 23a is operated. By the way, in the present embodiment, the picture to be printed is not displayed on the LCD 16. The picture, however, may be displayed on the LCD 16 as a thumbnail image.

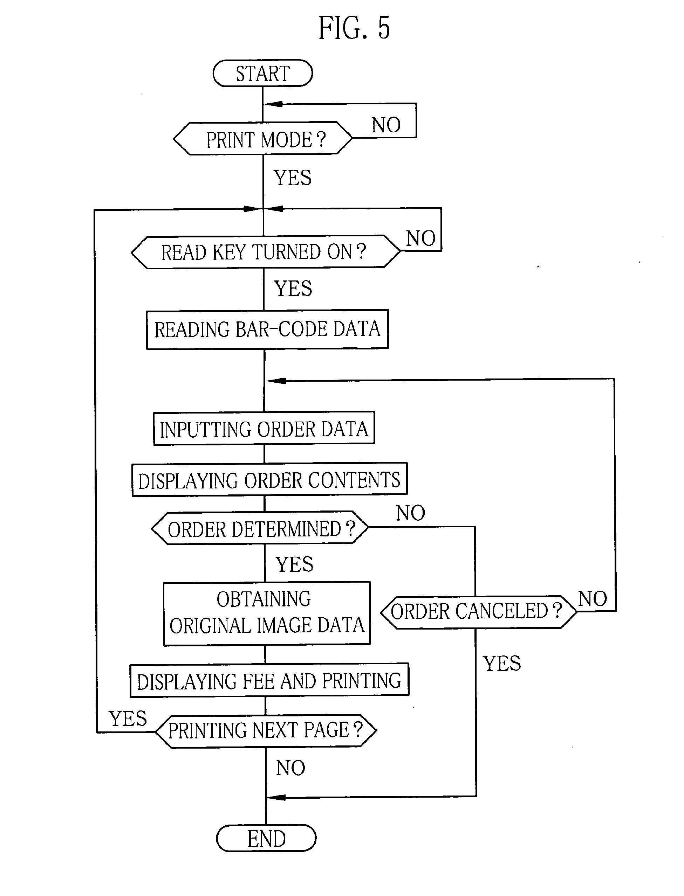

Upon operation of the determination button 23a, the inputted order data is transferred to the data communicating section 13 to be connected with the image server 3 via the internet 7. Successively, on the basis of information regarding copyright and so forth, which are owned by the image supplier 5 , it is considered whether printing is allowed or not. When printing is allowed, the image server 3 is searched and the user receives the original detailed image data concerned. At the same time, the user may receive charge data in accordance with the original image data. The charge data is displayed on the LCD 16. Meanwhile, the original image data is saved in the image-data memory 19. After that, the color printing section 18 produces a color print of the designated print size on the basis of the original image data. The color print is discharged to the print tray 2c as a print 20. Fig. 5 is a flowchart showing a sequence of the above-described operation. In this way, it is possible to obtain a high-quality print without regard to the print size. Incidentally, the monochrome printing section 17 may produce a monochrome print. Since the read original image data is saved in the image-data memory 19, it is possible to perform printing over and over again.

In the above embodiment, the data is read from the bar code of the pleased page and the original image data is obtained by connecting the printer with the image server every time. Alternatively, the read bar-code data may be memorized and stored to subsequently read the original image data all together from the image server. Moreover, the image data may be periodically downloaded from the image server to a storage medium of the printer. In this case, printing is performed on the basis of the image data stored in the storage medium of the printer.

In the above embodiment, the page to be printed is identified to obtain the original image data thereof, and the obtained image data is printed by the printer. However, when the obtained original image data has a data size and a designated print size exceeding a printable size of the printer, the data may be transferred to a printing shop. Also, when the obtained original image data differs in print format, the data may be transferred to the printing shop. In this case, printing is performed by printers placed at the printing shop. Such printers are able to produce a large-size print and are adaptable to various print format. Owing to this, it is possible to perform special printing relative to a large-size poster, a calendar and so forth. By the way, the printing shop may print the image on a T-shirt, a cup and so forth on the basis of the transferred image data.

The magazine of the above embodiment has the respective pages on which the bar code is printed. The bar code includes the supplier data, the title data, the page-identification data, the picture-identification data of the pictures printed on the respective pages, and so forth. The magazine, however, may have a single IC tag affixed on a predetermined area thereof. The IC tag stores the data of the whole pages. After the data of the IC tag has been read by a printer, a page to be printed is designated. In addition, the picture designation and so forth are carried out. In this case, is omitted the operation that the bar-code data of the page to be printed is read every time.

Instruction data for editing the prints may be added to the print order data. In this case, the user may add comment data concerning a comment to be printed. This comment may be printed on the front of the print or the back thereof. Further, the comment may be composed into the image to be printed. Furthermore, printing may be performed such that a manuscript comment written on the surface of the page to be printed is composed into the original image. At that time, the printer compares the scan image with the original image to automatically extract the manuscript comment. Character recognition is executed on the extracted portion to convert it into character data. A print is produced such that the converted character data is composed into the original image. Incidentally, the print may be produced such that the manuscript comment is composed as it is.

In the above embodiment, the picture identification data included in the bar-code data is read, and on the basis of the read data, the original image data is obtained from the connected image server. Although printing is performed in this way, identification data for identifying merchandise shown in a picture may be added to the bar-code data. The identification data for the merchandise is read, and on the basis of the read data, the merchandise is ordered to a merchandise-ordering center, where the order of the merchandise is managed.

Further, the bar-code data may include text identification data for identifying a text printed on the original. The printer reads the text identification data of the page to be printed, and on the basis of the read data, the original detailed text data concerned is obtained from a connected text server in which the original text data is stored. Printing is performed on the basis of the obtained original text data. Incidentally, the text data itself may be transferred to a personal computer or the like instead of printing.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A printer (2) comprising:
read means (11) for reading original identification information (6a) included in a print medium (6), said original identification information being used for identifying an original of said print medium;
image-data obtaining means (14) for obtaining image data corresponding to said original identification information; and
print means (18) for performing printing on the basis of the obtained image data.

2. A printer according to claim 1, wherein said original identification information is represented by a bar code and said read means reads out data of said bar code.

3. A printer according to claim 2, further comprising:
a read head (11a) for reading said bar code, said read means reading out the data of said bar code through said read head.

4. A printer according to claim 1, further comprising:
a data communicating section (13) connected to an image server (3) storing the image data, said image-data obtaining means obtaining the image data from said image server through said data communicating section.

5. A printer according to claim 4 , wherein said image server is placed at a side of an image supplier supplying the image data, said image data being obtained by searching said image server on the basis of said original identification information.

6. A printer according to claim 5, wherein said data communicating section is connected to said image server via the internet.

7. A printer according to claim 6, further comprising:
an image-data memory (19) for saving the obtained image data.

8. A printer according to claim 1, wherein said original identification information includes a page identification number for identifying a page of said print medium, and a picture identification number for identifying a picture printed on said print medium.

9. A printer according to claim 8, further comprising:
a liquid crystal display (16) for displaying said original identification information.

10. A printer according to claim 1, wherein said original identification information is recorded in an IC tag and said read means reads out data of said IC tag.

11. A printer according to claim 1, wherein said original identification information includes merchandise data for identifying merchandise shown in the original, said merchandise data being read to order the merchandise.

12. A printing method comprising the steps of:
reading original identification information included in a print medium, said original identification information being used for identifying an original of said print medium;
obtaining image data corresponding to said original identification information; and
performing printing on the basis of the obtained image data.

13. A printing method according to claim 12, wherein said original identification information is represented by a bar code and is read out by scanning said print medium with a read head (11a) for reading said bar code.

14. A printing method according to claim 12, wherein said image data is obtained by searching an image server (3), which stores the image data, on the basis of said original identification information.

15. A printing method according to claim 14, wherein said image server is placed at a side of an image supplier supplying the image data.

16. A printing method according to claim 15, wherein said image server is connected via the internet.

17. A printing method according to claim 16, further comprising the step of:
storing the obtained image data in an image-data memory (19).
